# EUROPEAN PATENT APPLICATION

(11) **EP 3 293 663 A1**
(43) Date of publication of application: **14.03.2018**
(21) Application number: 16198049.5
(22) Date of filing: 09.11.2016
(51) Int. Cl.: G06F 21/57, G06Q 10/06, H04L 29/06

(54) **METHODS AND SYSTEMS FOR INTEGRATED RISK MANAGEMENT IN ENTERPRISE ENVIRONMENTS**

(30) Priority: 07.09.2016 IN 201641030455
(71) Applicant: Wipro Limited, 560 035 Karnataka (IN)
(72) Inventor: VARKEY, Sunil, Kerala (IN); AGRAWAL, Ajay Chittarmal, 560 102 Bangalore (IN); HANSRAJ, Athulkumar, 560083 Bangalore (IN)
(74) Representative: Finnegan Europe LLP

(57) **Abstract**

A method and system for detecting and mitigating risk in an enterprise environment is disclosed. The method includes receiving information associated with one or more of an enterprise computing environment structure, an application topology, and a system topology. Thereafter, the method correlates the received information associated with the enterprise computing environment structure, the application topology, and the system topology. The method further includes detecting one or more risks associated with the enterprise environment in response to correlating the received information. The one or more risks that are detected are thereafter monitored in the enterprise environment. In response to monitoring the one or more risks, the method thereafter performs a corrective action for the one or more risks that are monitored.

## Description

### Technical Field

The present invention relates to security risk management in enterprise computing environments, in particular, to methods and systems for integrated security risk management in an enterprise environment.

### Background

Enterprises constantly strive to manage Information Technology (IT) risks. Risks include, for example, risks to the security or reliability of an enterprise computing environment. The constantly changing technologies in the IT environment often result in introduction of new risks in the enterprise environment. Typically, risk identification in the enterprise environment is localized, such as, the risks pertaining to application and infrastructure, isolating the cyber and enterprise IT landscape.

Other approaches to identifying risks are through questionnaires, interviews, meetings and discussions. However, identification of risk greatly depends on the knowledge of the user about the purpose of information systems, infrastructures and technology vulnerabilities, and threats to the enterprise environment, thereby limiting the effectiveness of risk identification.

Moreover, due to various types of IT systems, diversified architectures and dynamic nature of risks, there is no one-size-fit approach for risk identification methods. Also, undiscovered vulnerabilities in technology and applications can have a cascading effect of cyber threats on other IT systems in the enterprise environment, leading to unforeseen impacts.

### SUMMARY

In one embodiment, a method for mitigating risk in an enterprise environment is disclosed. The method includes receiving, through a user interface, information associated with at least one of an enterprise computing environment structure, an application topology or a system topology; correlating, by a risk manager controller, the received information associated with the at least one of the enterprise computing environment structure, the application topology or the system topology; detecting, by the risk manager controller, at least one risk associated with the enterprise environment in response to correlating the received information; monitoring, by the risk manager controller, the at least one risk detected in the enterprise environment; and performing, by the risk manager controller, a corrective action for the at least one risk monitored in the enterprise environment. The term user interface may be used interchangeably with the term business interface. The term enterprise computing environment structure may be used interchangeably with the term business design structure.

In another embodiment an enterprise risk mitigation system is disclosed. The enterprise risk mitigation system includes a user interface for receiving information associated at least one of an enterprise computing environment structure, an application topology or a system topology; and a risk manager controller operatively coupled to the user interface, the risk manager controller configured to correlate the received information associated with the at least one of the enterprise computing environment structure, the application topology or the system topology; detect at least one risk associated with the enterprise environment in response to correlating the received information; monitor the at least one risk detected in the enterprise environment; and perform a corrective action for the at least one risk monitored in the enterprise environment.

The risk manager controller may be further configured to store the at least one of the enterprise computing environment structure, the application topology, and the system topology in an enterprise context module. The risk manager controller may be further configured to: retrieve historical risk information associated with the at least one of the enterprise computing environment structure, the application topology, and the system topology from a historical incident repository module; and retrieve current risk information associated with the at least one of the enterprise computing environment structure, the application topology, and the system topology from a threat intelligence feed module, wherein the threat intelligence feed module comprises vulnerability information associated with the at least one of the enterprise computing environment structure, the application topology, and the system topology, information associated with new vectors of existing threats, and information associated with new threats prevailing in the cyber world. The risk manager controller may be further configured to determine at least one of a dependent application, and a dependent infrastructure associated with the enterprise computing environment structure, the application topology, and the system topology from a configuration module. The risk manager controller may be further configured to verify an access control mechanism associated with the at least one of the dependent application, the dependent infrastructure, the enterprise computing environment structure, the application topology, and the system topology. The risk manager controller may be further configured to: determine a remediation patch for the at least one risk detected in the enterprise environment; check whether the remediation patch for the at least one risk detected is available in a patch server; retrieve the remediation patch from the patch server when the remediation patch is available in the patch server; and trigger the patch server to synchronize with at least one Original Equipment Manufacturer (OEM) to retrieve the remediation patch when the remediation patch is not available in the patch server. The risk manager controller may be further configured to validate the remediation patch retrieved from the OEM in a test environment. The risk manager controller may be further configured to automatically deploy the corrective action for the at least one risk monitored, wherein the corrective action comprises at least one of a remediation patch, a software code, a network filter, a security policy, or a security application. The risk manager controller may be further configured to: log status of the deployment of the corrective action for the at least one risk monitored in a knowledge database; and notify at least one stakeholder regarding the status of the deployment of the corrective action for the at least one risk monitored. The risk manager controller may be further configured to periodically publish a report, wherein the report comprises information associated with the at least one risk, remediation patch corresponding to the at least one risk, OEM, and the corrective action associated with the at least one risk.

In yet another embodiment, a computer-usable medium is disclosed, the computer-usable medium having non-transitory computer readable instructions stored thereon for execution by a risk manager controller in an enterprise risk mitigation system to perform a method for receiving, through a user interface, information associated with at least one of an enterprise computing environment structure, an application topology, or a system topology; correlating the received information associated with the at least one of the enterprise computing environment structure, the application topology, or the system topology; detecting at least one risk associated with the enterprise environment in response to correlating the received information; monitoring the at least one risk detected in the enterprise environment; and performing a corrective action for the at least one risk monitored in the enterprise environment.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a system diagram of an enterprise environment (that is exemplary) in which various embodiments may be employed.
**FIG. 2** illustrates a flowchart of a method for mitigating risk in an enterprise environment, in accordance with an embodiment.
**FIG. 3** illustrates a flowchart of a method for storing received information, in accordance with an embodiment.
**FIG. 4** illustrates a flowchart of a method for correlating received information, in accordance with an embodiment.
**FIG. 5** illustrates a flowchart of a method for monitoring received information, in accordance with an embodiment.
**FIG. 6** illustrates a flowchart of a method for validating remediation patch in a test environment, in accordance with an embodiment.
**FIG. 7** illustrates a flowchart of a method for automatically deploying corrective action for one or more risks that are monitored in the enterprise **environment,** in accordance with an embodiment.
**FIG. 8** illustrates a flowchart of a method for a publishing a report associated with the one or more risks, in accordance with an embodiment.
**Fig. 9** illustrates an enterprise risk mitigation system, in accordance with an embodiment.
**FIG. 10** illustrates a block diagram of an exemplary computer system for implementing various embodiments.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Various embodiments provide methods, systems, and computer program products for integrated risk management in an enterprise environment. Specifically, the method detects and mitigates risk in an enterprise environment. The risks may include risks to the security or reliability of the enterprise environment. The method includes receiving information associated with at least one of an enterprise computing environment structure, an application topology or a system topology. The method correlates the received information associated with the at least one of the enterprise computing environment structure, the application topology or the system topology. Thereafter, the method detects at least one risk associated with the enterprise environment in response to correlating the received information. The method monitors the at least one risk detected in the enterprise environment. Further, the method performs a corrective action for the at least one risk monitored in the enterprise environment.

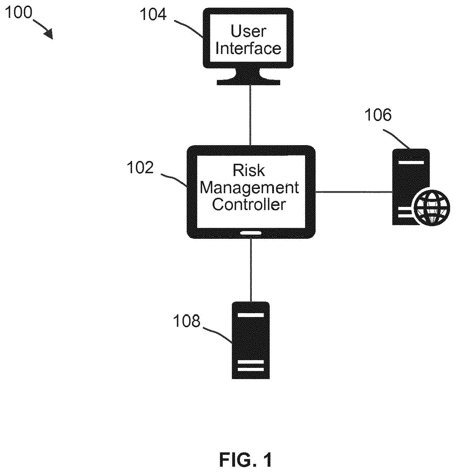

FIG. 1 is a system diagram of an enterprise computing environment 100 (hereafter referred to simply as "enterprise environment") in which various embodiments may be employed. Enterprise environment 100 may include a risk manager controller 102, a user interface 104, a server 106, and a database 108. Risk manager controller 102 may include one or more risk analysis software that may perform risk identification and risk management on data received from each source in enterprise environment 100. Data required for performing risk identification and risk management from each source in enterprise environment 100 may be sent to risk manager controller 102 in an automatic manner. Alternatively, data required for performing risk identification and risk management associated with a source in enterprise environment may be sent to risk manager controller 102 through user interface 104.

Server 106 provides risk manager controller 102 with existing vulnerability data, threat data, log data, events data, historical data, legal requirements data, compliance data, and risk data associated with various components present in enterprise environment 100. Examples of the various components in enterprise environment 100 include Enterprise Resource Planning (ERP) system, Customer Relationship Management (CRM) system, applications, and data warehouse (not shown in Fig. 1). Database 108 may be used as a central repository to store information associated with risk manager controller 102, user interface 104, server 106 and the various components present in enterprise environment 100.

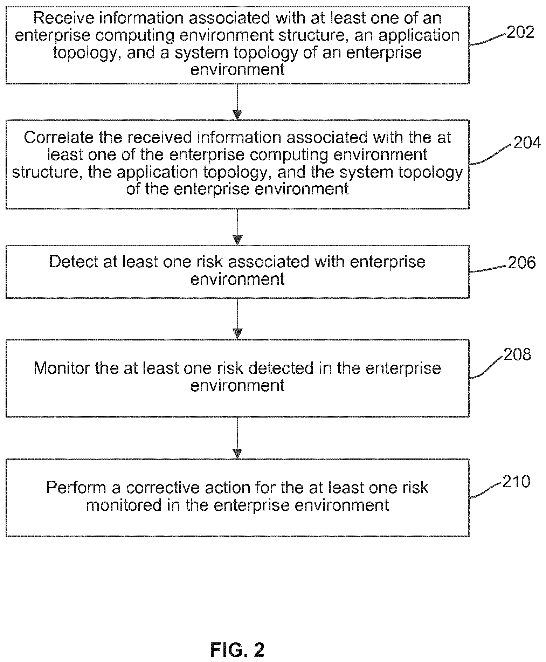

FIG. 2 illustrates a flowchart of a method for mitigating risk in an enterprise environment, in accordance with an embodiment. As explained in conjunction with Fig. 1, data is produced by various components in enterprise environment 100. In order to manage the risk associated with the data produced by these components, the data needs to be analyzed to identify actual and potential risks. The data may be sent for analysis by the various components either in an automatic manner or may be sent manually by an authorized user using a user interface present in enterprise environment 100.

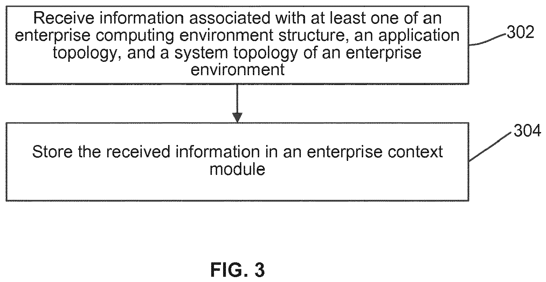

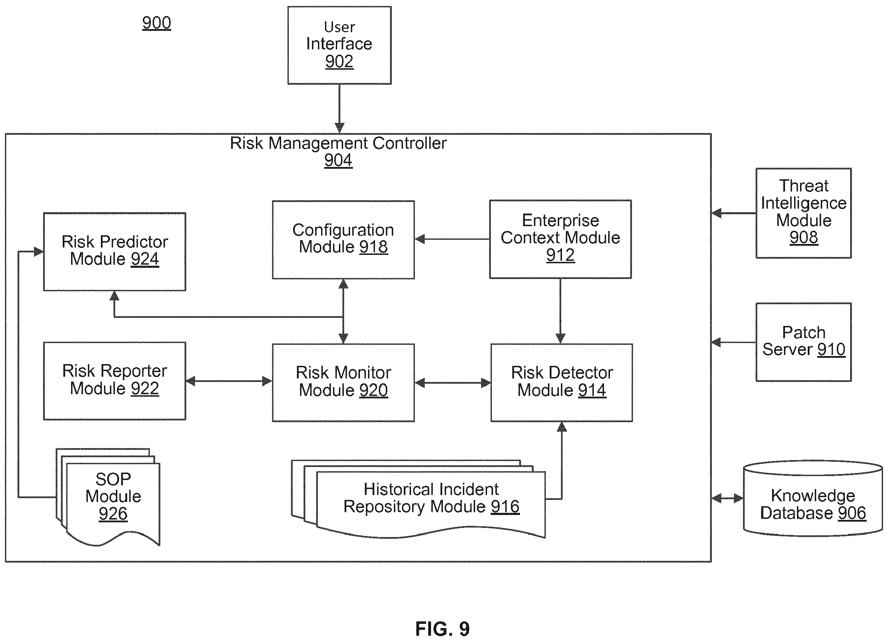

Thus, at step 202, information associated with one or more of an enterprise computing environment structure, an application topology, and a system topology is received for a primary application and a primary infrastructure within enterprise environment 100. The enterprise computing environment structure data describes the function, work flow, and/or criticality of the various components and systems present in enterprise environment 100. Information associated with enterprise computing environment structure is useful to identify the enterprise context required to perform risk detection in enterprise environment 100. The system topology data describes the primary infrastructure present in enterprise environment 100. Additionally, the system topology data provides information on design, architecture, system, network, and security components present in enterprise environment 100. Information associated with system topology is useful to integrate the primary infrastructure with other infrastructure present in enterprise environment 100. The application topology data describes the layout of the primary application. Additionally, the application topology data provides information on application architecture, functionality, libraries used, connectors, Application Programming Interfaces (APIs), and Uniform Resource Locators (URLs). Information associated with the application topology is useful to integrate the primary application with other applications and databases in enterprise environment 100. The information associated with the enterprise computing environment structure, the application topology, and the system topology maybe stored in an enterprise context module. This is further explained in detail in conjunction with FIG. 3. Further, the information may be provided by an authorized user either manually or through a user interface module which connects to the enterprise context module. This is further explained in detail in conjunction with FIG. 9.

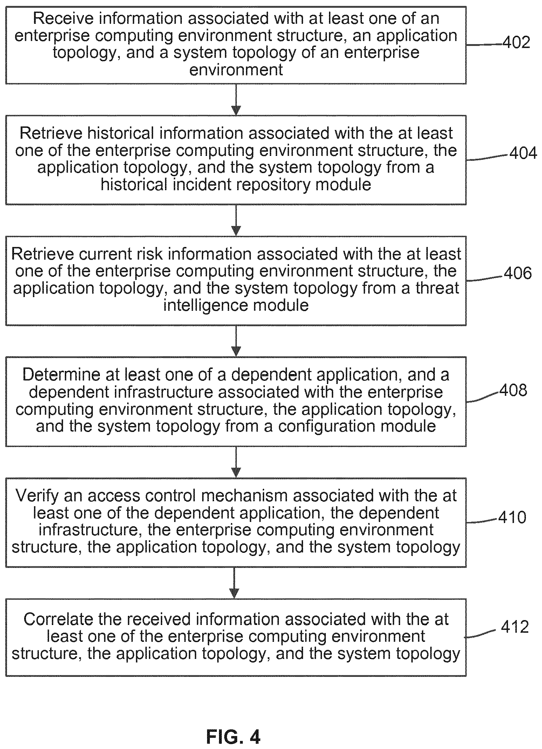

Thereafter, at step 204, the received information associated with the one or more of the enterprise computing environment structure, the application topology, and the system topology is correlated. Additionally, during the step of correlation, historical risk information associated with the one or more of the enterprise computing environment structure, the application topology, and the system topology is retrieved. In the same manner, current risk information associated with the one or more of the enterprise computing environment structure, the application topology, and the system topology is retrieved. This is further explained in detail in conjunction with FIG. 4.

Further, during the step of correlation, one or more of a dependent application, and a dependent infrastructure associated with the enterprise computing environment structure, the application topology, and the system topology is determined. Thereafter, an access control mechanism associated with the one or more of the dependent application, the dependent infrastructure, the enterprise computing environment structure, the application topology, and the system topology is verified. This is further explained in detail in conjunction with FIG. 4. The correlation is performed by processing the information associated with the one or more of the dependent application, the dependent infrastructure, the enterprise computing environment structure, the application topology, and the system topology. Processing may include performing one or more operations on the received information. Examples of the one or more operation include data conversion, data filtering, data segmentation, data categorization, data compression, and object relationship identification.

After correlating the received information, at step 206, one or more risks associated with enterprise environment 100 are detected. In order to detect the one or more risks, the technology used in the application and the underlying infrastructure is determined. Thereafter, based on the technology, information associated with the vulnerabilities, security events, and risks' pertaining to the technology of the application and the underlying infrastructure is identified and retrieved.

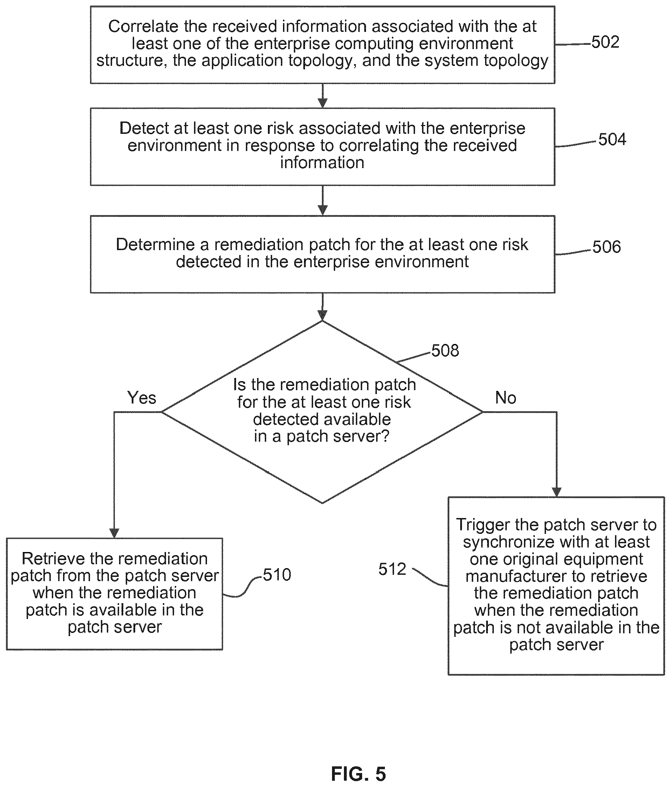

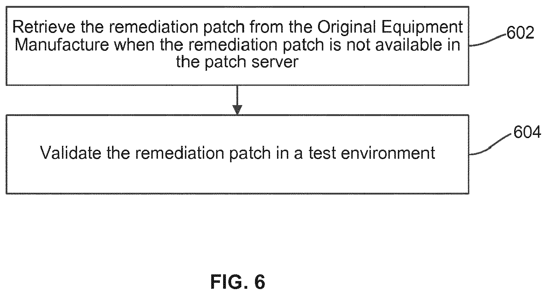

Thereafter, at step 208, the one or more risks that are detected in enterprise environment 100 are monitored. Monitoring of the one or more risks includes determining a remediation patch for the one or more risks that are detected in enterprise environment 100. After determining the remediation patch for the one or more risks, a check is performed to determine whether the remediation patch is available at a patch server. In the event when the remediation patch is available, the remediation patch is retrieved from the patch server to resolve the one or more risks in enterprise environment 100. However, when the remediation patch is not available at the patch server, a synchronization operation is triggered to retrieve the remediation patch from one or more Original Equipment Manufacturers (OEMs). This is further explained in detail in conjunction with FIG. 5. After retrieving the remediation patch from the one or more OEMs, the retrieved remediation patch is validated in a test environment. This is further explained in detail in conjunction with FIG. 6.

After monitoring the one or more risks that are detected in enterprise environment 100, a corrective action is performed, at step 210, for the one or more risks that are monitored in enterprise environment 100. The corrective action is performed by automatically deploying the corrective action for the one more risks that are monitored. Examples of the corrective action include, but are not limited to applying a remediation patch, executing a software code, applying a network filter, deploying a security policy, and running a security application. After performing the corrective action, status of the deployment of the corrective action for the one or more risks that are monitored is logged or stored. In an embodiment, the status of the deployment of the corrective action for the one or more risks that are monitored is notified to one or more stakeholders. Thereafter, a risk report associated with the corrective actions may be published periodically. The risk report may include information associated with the one or more risks, remediation patch associated with the one or more risks, and information associated with the OEM.

FIG. 3 illustrates a flowchart of a method for storing received information, in accordance with an embodiment. At step 302, information associated with one or more of an enterprise computing environment structure, an application topology, and a system topology is received. The information may be received manually through an authorized user who may enter details associated with the enterprise computing environment structure, the application topology, and the system topology in a user interface. Alternatively, the information may be automatically retrieved by utilizing various connectors and interfaces present in enterprise environment 100 that link the various components and systems present in enterprise environment 100. In an embodiment, information associated with the one or more of the enterprise computing environment structure, the application topology, and the system topology may be retrieved from a configuration module. The configuration module is built-in with the industry best practices and standards. Further, the configuration module receives updates from various standards and frameworks that are published such as NIST, ISO, CIS, FISMA, and FFIEC. Additionally, compliance requirements such as HIPPA, PCI DSS, and legal requirements may also be built-in and subsequently updated real-time based on various versions that are released by corresponding regulators. This is further explained in detail in conjunction with FIG. 9.

Thereafter, at step 304, the received information is stored in an enterprise context module. The enterprise context module may further include an Environment Structure (ES) module, an Application Topology (AT) module, and a System Topology (ST) module for streamlining and simplifying the storage of the received information. Thus, information associated with the enterprise computing environment structure may be tagged and stored in ES module, information associated with the application topology may be tagged and stored in AT module, and information associated with the system topology may be tagged and stored in the ST module present in the enterprise context module.

In an embodiment, the enterprise context module also feeds data to the configuration module. Thus, the configuration module may be automatically updated to fetch information associated with an application and its underlying infrastructure as well as fetch information associated with a dependent application and its underlying infrastructure from the enterprise context module. This is further explained in detail in conjunction with FIG. 9. It will be evident to a person skilled in the art that several additional modules and variations may be present in the enterprise context module depending on the type and context of information associated with enterprise environment 100 that is received from the authorized user through the user interface or automatically through the connectors and interfaces present in enterprise environment 100.

FIG. 4 illustrates a flowchart of a method for correlating received information, in accordance with an embodiment. At step 402, information associated with the enterprise computing environment structure, the application topology, and the system topology is received. This has already been explained in conjunction with FIG. 3. After receiving the information, at step 404, historical information associated with the one or more of the enterprise computing environment structure, the application topology, and the system topology is retrieved from a historical incident repository module. The historical incident repository module is configured to record all security incidents detected in enterprise environment 100. The historical incident repository module records the security events based on the technology associated with the application and the underlying infrastructure that is affected by a security incident. In an embodiment, information present in the historical incident repository module is provided as feed to other modules in enterprise environment 100. Alternatively, information present in the historical incident repository module may be provided as a response to a query or an instruction that is executed by other modules in enterprise environment 100. Further, the historical incident repository module may also be configured to retain logs and events associated with enterprise environment 100. This is further explained in conjunction with FIG. 9.

Thereafter, at step 406, current risk information associated with the one or more of the enterprise computing environment structure, the application topology, and the system topology is retrieved from a threat intelligence module. The current risk information corresponds to risks that are prevalent in the cyber world industry. In an embodiment, the threat intelligence module is an external module that provides information associated with the current vulnerabilities in the applications and the underlying infrastructure. Additionally, the threat intelligence module may also include information associated with new vectors of existing threats, new threats prevailing in the cyber world and the corresponding remediation approach to address the one or more risks. The remediation approach may be a fix or a work around for the one or more risks. This is further explained in detail in conjunction with FIG. 9.

At step 408, one or more of a dependent application, and a dependent infrastructure associated with the enterprise computing environment structure, the application topology, and the system topology is determined. The dependent application and the dependent infrastructure may be determined by querying the configuration module. The configuration module is explained in detailed in conjunction with FIG. 9. After determining the dependent application and the dependent infrastructure, at step 410, an access control mechanism associated with the one or more of the dependent application, the dependent infrastructure, the enterprise computing environment structure, the application topology, and the system topology is verified. The access control mechanism is verified to analyze a current state of security associated with the applications and the underlying infrastructure as well as the dependent applications and dependent infrastructure present in enterprise environment 100 for a given context. As a result of verifying the access control mechanism, any discrepancies or shortfalls present in enterprise environment 100 are highlighted.

Thereafter, at step 412, correlation is performed to understand relationships and generate insights based on one more of the enterprise computing environment structure, the application topology, the system topology, the dependent application, the dependent infrastructure, the technology associated with the primary application and the primary infrastructure and the technology associated with the dependent application and dependent infrastructure, and the corresponding access control mechanism. In order to perform the correlation, the information is processed to achieve one or more objectives. For example, the information may be subjected to a plurality of compression algorithms in order to compress or reduce the data. In the same manner, the information may be filtered to fulfill one or more criteria in order to obtain a refined data set. Further, the information may be processed using one or more algorithms to identify a relationship that may exist. It will be evident to a person skilled in the art that various data processing mechanisms and algorithms may be utilized to correlate the received information.

FIG. 5 illustrates a flowchart of a method for monitoring received information, in accordance with an embodiment. At step 502, the received information associated with the one or more of the enterprise computing environment structure, the application topology, and the system topology is correlated. After correlation, at step 504, the one or more risks associated with enterprise environment 100 is detected. This has already been explained in conjunction with FIG. 2. After detecting the one or more risks, at step 506, a remediation patch for the one or more risks that are detected in enterprise environment 100 is determined. The remediation patch is used to resolve the one or more risks that are detected in enterprise environment 100. Thereafter, at step 508, a check is performed to determine whether the remediation patch for the one or more risks that are detected is available in a patch server. In an embodiment, the patch server is configured to store remediation patches for a plurality of risks present in enterprise environment 100. In another embodiment, the patch server may be configured within enterprise environment 100. Alternatively, the patch server may be configured external to enterprise environment 100. Further, in an embodiment, the patch server may be updated periodically in order to keep the patch server up to date with remediation patches corresponding to the one or more risks.

In the event that the remediation patch is available, then at step 510, the remediation patch is retrieved from the patch server. It will be evident to a person skilled in the art that more than one remediation patches may be retrieved for a risk that is monitored. In the event that the remediation patch is not available, then at step 512, a synchronization operation is triggered to synchronize the patch server with one or more OEMs. The one or more OEMs are identified based on the primary application, the primary infrastructure, the dependent application, and the dependent infrastructure. In response to triggering of the synchronization operation, each OEM of the one or more OEMs determines whether the unavailable remediation patch at the patch server is available with the OEM. If the unavailable remediation patch is available with an OEM, then the OEM transfers the remediation patch to the patch server. In an embodiment, the transfer of remediation patch from the one or more OEMs may be performed periodically thereby eliminating the need for triggering the synchronization operation. Thereafter, for the one or more risks that are detected, corresponding remediation patches as well as the one or more risks are monitored.

FIG. 6 illustrates a flowchart of a method for validating remediation patch in a test environment, in accordance with an embodiment. At step 602, the remediation patch is retrieved from the OEM when the remediation patch is not available in the patch server. This has already been explained in conjunction with FIG. 5. After retrieving the remediation patch, at step 604, the remediation patch is validated in a test environment. The remediation patch is validated to determine whether the retrieved remediation patch is correct and up to date. The test environment is used to test the fixes and work around present in the remediation patch. If the test of the remediation patch is successful in the test environment, then the remediation patch is tagged as approved. Thereafter, the approved remediation patch is deployed in the production environment of enterprise environment 100 through a change management process module present in the patch server.

In the event that the test of the remediation patch is not successful, then a notification is sent to an authorized user responsible for handling the remediation patches in enterprise environment 100. Further, a notification may also be sent to the authorized user to provide information on any downtime that may be associated with deployment of the remediation patch in enterprise environment 100. In the same manner, a notification may also be sent to the authorized user if the remediation patch is not deployed in a specified time that is associated with the remediation patch.

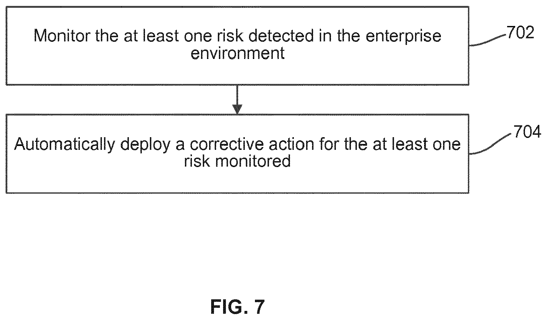

FIG. 7 illustrates a flowchart of a method for automatically deploying corrective action for one or more risks that are monitored, in accordance with an embodiment. At step 702, the one or more risks that are detected in enterprise environment 100 are monitored. Thereafter, at step 704, a corrective action is automatically deployed for the one or more risks that are monitored. Examples of the corrective action that may be automatically deployed may include one or more of a remediation patch associated with a risk of the one or more risks, a software code that fixes a security threat, a network filter that filters secure data from unsecure data, a security policy that recommends measures to strengthen the security of enterprise environment, and a security application that removes threats and issues present in various application and underlying infrastructure associated with enterprise environment 100. For example, a corrective action may be performed by blocking the unused or unwanted ports associated with an application or an infrastructure.

In an embodiment, the corrective action may be determined by obtaining configuration information from the configuration module, obtaining information on potential vulnerabilities associated with applications and infrastructure in enterprise environment 100 from a risk predictor module, and obtaining remediation information from the patch server. The corrective action resolves the one or more risks that are monitored and thereby mitigates the threat posed by the one or more risks that are monitored. The corrective action is deployed automatically without requiring any user intervention. The automatic deployment may be initiated based on one or more rules that associate the corrective action to the one or more risks that are monitored. In an embodiment, the risk monitor module transfers information associated with new risks that are identified from the one or more risks that are monitored to the historical incident repository module. Further, the risk monitor module may also transfer information associated with the remediation patch that are successfully deployed to the historical incident repository module.

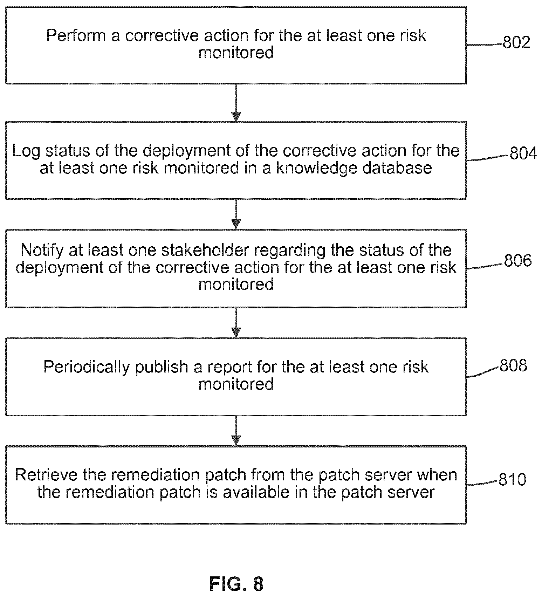

FIG. 8 illustrates a flowchart of a method for publishing a report associated with the one or more risks, in accordance with an embodiment. At step 802, a corrective action is performed for the one or more risks that are monitored. The corrective action may be deployed automatically or may be deployed manually by an authorized user. This has already been explained in conjunction with FIG. 7. Thereafter, at step 804, status of the deployment of the corrective action for the one or more risks that are monitored is logged in a knowledge database. In an embodiment, the knowledge database acts as a central repository for information associated with applications and its underlying infrastructure in enterprise environment 100. The knowledge database may be accessed by an authorized user to retrieve the status of a corrective action. Further, at step 806, the status of deployment of the corrective action for the one or more risks that are monitored is notified to one or more stakeholders. A stakeholder is a user who is responsible for a specific application or infrastructure in enterprise environment. The one or more stakeholders may take additional actions depending on the status of the corrective action notified to them.

Thereafter, at step 808, a report may be published periodically. The report includes information associated with the one or more risks, remediation patch associated with the one or more risks, OEMs, and corrective action associated with the one or more risks. Additionally, a risk predictor module may be configured to obtain configuration information from the risk monitor module and predict the risks in similar applications and infrastructure in enterprise environment 100 to determine potential risks. Post detecting the potential risks, the risk predictor module may fetch the remediation procedure from a Standard Operating Procedure (SOP) module to auto remediate the potential risks. In an embodiment, the risk predictor module may be configured with advanced remediation and detection algorithms to analyze complex design and deliver accurate results. In another embodiment, the risk predictor module may be configured to predict and determine the potential risks from historical risk reports that have been published.

FIG. 9 illustrates an enterprise risk mitigation system 900, in accordance with an embodiment. Enterprise risk mitigation system 900 includes a user interface 902, a risk manager controller 904, a knowledge database 906, a threat intelligence module 908, and a patch server 910. User interface 902, risk manager controller 904, knowledge database 906, threat intelligence module 908, and patch server 910 are operatively connected with each other. User interface 902 is accessed by a system administrator and an application owner in enterprise environment 100. User interface 902 is configured to receive information associated with one or more of an enterprise computing environment structure, an application topology, and a system topology associated with a primary application and its underlying infrastructure.

The enterprise computing environment structure data describes mission, work flow and criticality of the various components and systems present in enterprise environment 100. Information associated with enterprise computing environment structure is useful to identify the enterprise context required to perform risk detection in enterprise environment 100. The system topology data describes the primary infrastructure present in enterprise environment 100. Additionally, the system topology data provides information on design, architecture, system, network, and security components present in enterprise environment 100. Information associated with system topology is useful to integrate primary infrastructure with other infrastructure present in enterprise environment 100. The application topology data describes the layout of the primary application. Additionally, the application topology data provides information on application architecture, functionality, libraries used, connectors, Application Programming Interfaces (APIs), and Uniform Resource Locators (URLs). Information associated with the application topology is useful to integrate the primary application with other applications and databases in enterprise environment 100.

In an embodiment, the system administrator may manually feed the enterprise computing environment structure, the system topology, workflow, criticality of application, and data sensitivity in enterprise context in user interface 902. In the same manner, the application owner may manually feed the application topology, application design, architecture, technology, infrastructure topology, connectors, and integrations points in user interface 902. The information received from the system administrator and the application owner is stored in an enterprise context module 912. The information may be transferred from user interface 902 to enterprise context module 912 using one or more interfaces, wherein an interface primarily facilitates communication between a primary system and other systems in enterprise environment 100. For example, an interface may correspond to an Application Programming Interface (API) published by an external module that facilitates communication between the primary system and other systems in enterprise environment 100.

After receiving the information, a risk detector module 914 correlates the received information associated with the one or more of the enterprise computing environment structure, the application topology, and the system topology. Further, risk detector module 914 may also retrieve historical risk information associated with the one or more of the enterprise computing environment structure, the application topology, and the system topology from a historical incident repository module 916 for performing correlation. In an embodiment, risk detector module 914 may also retrieve current risk information associated with the one or more of the enterprise computing environment structure, the application topology, and the system topology from threat intelligence module 908 for performing correlation.

Historical incident repository module 916 is configured to record all security incidents detected in enterprise environment 100. Historical incident repository module 916 records the security events based on the technology associated with the application and the underlying infrastructure that is affected by a security incident. In an embodiment, information present in historical incident repository module 916 is provided as feed data to risk detector module 914. Alternatively, information present in historical incident repository module 916 may be provided as a response to a query or an instruction that is executed in risk detector module 914. Further, historical incident repository module 916 may also retain logs and events associated with enterprise environment 100.

The current risk information stored in threat intelligence module 908 corresponds to risks that are prevalent in the industry. In an embodiment, threat intelligence module 908 is an external module that provides information associated with the current vulnerabilities in the applications and the underlying infrastructure. Additionally, threat intelligence module 908 may also include information associated with new vectors of existing threats, new threats prevailing in the cyber world and the corresponding remediation approach to address the one or more risks. The remediation approach may be a fix or a work around for the one or more risks.

In addition to retrieval of historical risk information and current risk information, risk detector module 914 may query a configuration module 918 to determine one or more of a dependent application, and a dependent infrastructure associated with the enterprise computing environment structure, the application topology, and the system topology. Configuration module 918 is configured to absorb feeds provided by enterprise context module 912. Further, configuration module is configured to store information regarding the integration and connection points of all applications and infrastructure in enterprise environment 100. In an embodiment, configuration module may also store information associated with various platforms within enterprise environment 100 as well as information associated with the integration mechanisms, application dependencies, and system dependencies.

After determining the dependent application and the dependent infrastructure, risk detector module 914 verifies an access control mechanism associated with the one or more of the dependent application, the dependent infrastructure, the enterprise computing environment structure, the application topology, and the system topology. The access control mechanism is verified by risk detector module 914 to analyze a current state of security associated with the applications and the underlying infrastructure as well as the dependent applications and dependent infrastructure present in enterprise environment 100 for a given context. Based on the result of verification, risk detector module may highlight any discrepancies or shortfalls present in enterprise environment 100.

Thereafter, risk detector module 914 performs correlation to understand relationships and generate insights based on one more of the enterprise computing environment structure, the application topology, the system topology, the dependent application, the dependent infrastructure, the technology associated with the primary application and the primary infrastructure and the technology associated with the dependent application and dependent infrastructure, and the corresponding access control mechanism. In order to perform the correlation, risk detector module 914 may process the information to achieve one or more objectives. For example, risk detector module 914 may subject the information to a plurality of compression algorithms in order to compress or reduce the data. In the same manner, risk detector module 914 may filter the information to fulfill one or more criteria in order to obtain a refined data set. Further, risk detector module 914 may process the information using one or more algorithms to identify a relationship that may exist. It will be evident to a person skilled in the art that various data processing mechanisms and algorithms may be utilized by risk detector module 914 to correlate the received information.

After performing the correlation, risk detector module 914 detects one or more risks associated with enterprise environment 100. In order to detect the one or more risks, risk detector module 914 may determine the technology used in the application and the underlying infrastructure. Thereafter, risk detector module 914 may identify and retrieve information associated with the vulnerabilities, security events, and risks' pertaining to the technology of the application and the underlying infrastructure.

Information associated with the one or more risks that are detected by risk detector module 914 is thereafter transferred to a risk monitor module 920. Risk monitor module 920 monitors the one or more risks that are detected by risk detector module 914. Further, risk monitor module 920 determines a remediation patch for the one or more risks that are detected in enterprise environment 100. After determining the remediation patch for the one or more risks, risk monitor module 920 checks whether the remediation patch is available in patch server 910. Patch server 910 is configured to store remediation patches for a plurality of risks present in enterprise environment 100. Thus, patch server 910 may be periodically updated in order to keep patch server 910 up to date with the latest remediation patches.

In the event when the remediation patch is available, risk monitor module 920 retrieves the remediation patch from patch server 910 to resolve the one or more risks in enterprise environment 100. However, when the remediation patch is not available in patch server 910, a synchronization operation is triggered by risk monitor module 920 to retrieve the remediation patch from one or more OEMs (not shown in FIG). The one or more OEMs are identified based on the primary application, the primary infrastructure, the dependent application, and the dependent infrastructure. In response to triggering of the synchronization operation by risk monitor module 920, each OEM of the one or more OEMs determines whether the unavailable remediation patch at patch server 910 is available with the OEM. If the unavailable remediation patch is available with an OEM, then the OEM transfers the remediation patch to patch server 910. In an embodiment, the transfer of remediation patch from the one or more OEMs may be performed periodically thereby eliminating the need for triggering the synchronization operation by risk monitor module 920.

After retrieving the remediation patch, risk monitor module 920 validates the remediation patch in a test environment. The remediation patch is validated to determine whether the retrieved remediation patch is correct and up to date. The test environment is used to test the fixes and work around present in the remediation patch. If the test of the remediation patch is successful in the test environment, then risk monitor module 920 deploys the remediation patch in the production environment of enterprise environment 100. In the event that the test of the remediation patch is not successful, then risk monitor module 920 sends a notification to an authorized user responsible for handling the remediation patches in enterprise environment 100. Further, risk monitor module 920 may also send a notification to the authorized user to provide information on any downtime that may be associated with deployment of the remediation patch in enterprise environment 100. In the same manner, risk monitor module 920 may send a notification to the authorized user if the remediation patch is not deployed in a specified time associated with the remediation patch.

Thereafter, risk monitor module 920 performs a corrective action for the one or more risks that are monitored in enterprise environment 100. In an embodiment, the corrective action for the one more risks that are monitored may be automatically deployed by risk monitor module 920. Examples of the corrective action include, but are not limited to, applying a remediation patch, executing a software code, applying a network filter, deploying a security policy, and running a security application. After performing the corrective action, risk monitor module 920 may log or store the status of the deployment of the corrective action for the one or more risks that are monitored. Further, risk monitor module may notify the status of the deployment of the corrective action for the one or more risks that are monitored to one or more stakeholders.

Thereafter, a risk reporter module 922, which is operatively coupled to risk monitor module 920 and is configured to absorb feeds provided by risk monitor module 920 publishes a risk report, wherein the risk report includes information associated with the corrective actions that have been performed. The risk report may also include information associated with the one or more risks, risk severity, remediation patch associated with the one or more risks, status of the remediation patch, and information associated with the OEM. In an embodiment, risk reporter module 922 may also provide an executive dashboard for enterprise level consumption. Further, risk reporter module may also periodically publish closure status report to the system administrator and the application owner.

In an embodiment, enterprise risk mitigation system 900 may also include a risk predictor module 924 which absorbs feed from risk monitor module 920. Specifically, risk predictor module 924 may obtain configuration information from risk monitor module 920 and predict the risks in similar applications and infrastructure in enterprise environment 100 to determine potential risks. Post detecting the potential risks, risk predictor module 924 fetches the remediation procedure from a Standard Operating Procedure (SOP) module 926 to auto remediate the potential risks. Risk predictor module 926 is configured with advanced remediation and detection algorithms in order to analyze complex design and deliver accurate results. In another embodiment, risk predictor module 926 may be configured to predict and determine the potential risks from historical risk reports, statistics and data published by risk reporter module 922.

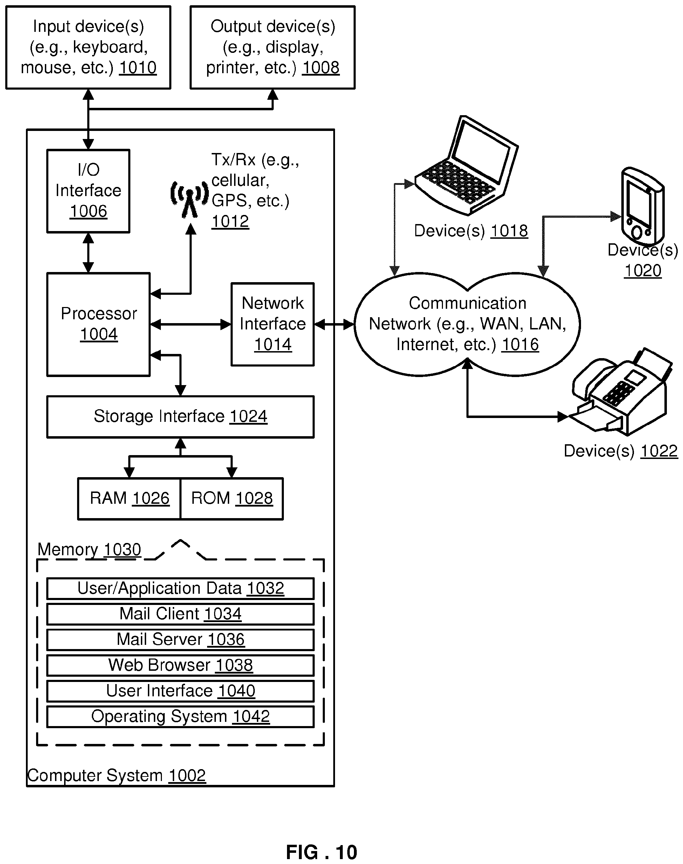

FIG. 10 illustrates a block diagram of an exemplary computer system 1002 for implementing various embodiments is disclosed. Computer system 1002 may comprise a central processing unit ("CPU" or "processor") 1004. Processor 1004 may comprise at least one data processor for executing program components for executing user- or system-generated requests. A user may include a person, a person using a device such as such as those included in this disclosure, or such a device itself. Processor 1004 may include specialized processing units such as integrated system (bus) controllers, memory management control units, floating point units, graphics processing units, digital signal processing units, etc. Processor 1004 may include a microprocessor, such as AMD Athlon, Duron or Opteron, ARM's application, embedded or secure processors, IBM PowerPC, Intel's Core, Itanium, Xeon, Celeron or other line of processors, etc. Processor 1004 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 1004 may be disposed in communication with one or more input/output (I/O) devices via an I/O interface 1006. I/O interface 1006 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 1006, computer system 1002 may communicate with one or more I/O devices. For example, an input device 1008 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 1010 may be a printer, fax machine, video display (e.g., cathode ray tube (CRT), liquid crystal display (LCD), light-emitting diode (LED), plasma, or the like), audio speaker, etc. In some embodiments, a transceiver 1012 may be disposed in connection with processor 1004. Transceiver 1012 may facilitate various types of wireless transmission or reception. For example, transceiver 1012 may include an antenna operatively connected to a transceiver chip (e.g., Texas Instruments WiLink WL1283, Broadcom BCM47601UB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, processor 1004 may be disposed in communication with a communication network 1014 via a network interface 1016. Network interface 1016 may communicate with communication network 1014. Network interface 1016 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. Communication network 1014 may include, without limitation, a direct interconnection, local area network (LAN), wide area network (WAN), wireless network (e.g., using Wireless Application Protocol), the Internet, etc. Using network interface 1016 and communication network 1014, computer system 1002 may communicate with devices 1018, 1020, and 1022. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 602 may itself embody one or more of these devices.

In some embodiments, processor 1004 may be disposed in communication with one or more memory devices (e.g., a RAM 1026, a ROM 1028, etc.) via a storage interface 1024. Storage interface 1024 may connect to memory devices 1030 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory devices 1030 may store a collection of program or database components, including, without limitation, an operating system 1032, a user interface application 1034, a web browser 1036, a mail server 1038, a mail client 1040, a user/application data 1042 (e.g., any data variables or data records discussed in this disclosure), etc. Operating system 1032 may facilitate resource management and operation of computer system 1002. Examples of operating system 1032 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 1034 may facilitate display, execution, interaction, manipulation, or operation of program components through textual or graphical facilities. For example, user interfaces may provide computer interaction interface elements on a display system operatively connected to computer system 1002, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, computer system 1002 may implement web browser 1036 stored program component. Web browser 1036 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, computer system 1002 may implement mail server 1038 stored program component. Mail server 1038 may be an Internet mail server such as Microsoft Exchange, or the like. Mail server 1038 may utilize facilities such as ASP, ActiveX, ANSI C++/C#, Microsoft .NET, CGI scripts, Java, JavaScript, PERL, PHP, Python, WebObjects, etc. Mail server 1038 may utilize communication protocols such as internet message access protocol (IMAP), messaging application programming interface (MAPI), Microsoft Exchange, post office protocol (POP), simple mail transfer protocol (SMTP), or the like. In some embodiments, computer system 1002 may implement mail client 1040 stored program component. Mail client 1040 may be a mail viewing application, such as Apple Mail, Microsoft Entourage, Microsoft Outlook, Mozilla Thunderbird, etc.

In some embodiments, computer system 1002 may store user/application data 1042, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments of the invention provide methods, and systems for detecting and mitigating risk in an enterprise environment. The method provides a comprehensive approach to risk management by facilitating auto-detection of risks in primary application and its underlying infrastructure in the enterprise environment. The method allows for holistic remediation of risks in the enterprise environment by enabling auto-prediction of potential risks in dependent applications and its underlying infrastructure. The method also allows for a centralized knowledge database to store information associated with risks that are monitored in the enterprise environment thereby allowing for faster and efficient remediation of the risks.

The specification has described systems and methods for detecting and mitigating risks in an enterprise environment. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A computer-implemented method for mitigating a risk to an enterprise computing environment, the method comprising:
receiving information associated with at least one of an enterprise computing environment structure, an application topology, and a system topology;
correlating the received information associated with the at least one of the enterprise computing environment structure, the application topology, and the system topology;
detecting at least one risk associated with the enterprise environment in response to correlating the received information;
monitoring the at least one risk detected in the enterprise environment; and
performing a corrective action for the at least one risk monitored in the enterprise computing environment.

2. The method of claim 1, wherein receiving the information comprises storing the at least one of the enterprise computing environment structure, the application topology, and the system topology in an enterprise context module.

3. The method of claim 1 or claim 2, wherein correlating the received information comprises:
retrieving historical risk information associated with the at least one of the enterprise computing environment structure, the application topology, and the system topology from a historical incident repository module; and
retrieving current risk information associated with the at least one of the enterprise computing environment structure, the application topology, and the system topology from a threat intelligence feed module, wherein the threat intelligence feed module comprises vulnerability information associated with the at least one of the enterprise computing environment structure, the application topology, and the system topology, information associated with new vectors of existing threats, and information associated with new threats prevailing in the cyber world.

4. The method of claim 3, wherein correlating the received information further comprises determining at least one of a dependent application, and a dependent infrastructure associated with the enterprise computing environment structure, the application topology, and the system topology from a configuration module.

5. The method of claim 4, wherein correlating the received information further comprises verifying an access control mechanism associated with the at least one of the dependent application, the dependent infrastructure, the enterprise computing environment structure, the application topology, and the system topology.

6. The method of any of the preceding claims, wherein monitoring the at least one risk comprises:
determining a remediation patch for the at least one risk detected in the enterprise environment;
checking whether the remediation patch for the at least one risk detected is available in a patch server;
retrieving the remediation patch from the patch server when the remediation patch is available in the patch server; and
triggering the patch server to synchronize with at least one Original Equipment Manufacturer (OEM) to retrieve the remediation patch when the remediation patch is not available in the patch server.

7. The method of claim 6, wherein monitoring the at least one risk further comprises validating the remediation patch retrieved from the OEM in a test environment.

8. The method of any of the preceding claims, wherein performing the corrective action comprises automatically deploying the corrective action for the at least one risk monitored, wherein the corrective action comprises at least one of a remediation patch, a software code, a network filter, a security policy, or a security application.

9. The method of claim 8, wherein performing the corrective action further comprises:
logging status of the deployment of the corrective action for the at least one risk monitored in a knowledge database; and
notifying at least one stakeholder regarding the status of the deployment of the corrective action for the at least one risk monitored.

10. The method of claim 8 or claim 9, wherein performing the corrective action further comprises periodically publishing a report, wherein the report comprises information associated with the at least one risk, remediation patch corresponding to the at least one risk, OEM, and the corrective action associated with the at least one risk.

11. An enterprise risk mitigation system, comprising means for performing the method of any of the preceding claims.

12. A computer-usable medium having computer readable instructions stored thereon that, when executed by a computer, cause the computer to perform the method of any of claims 1 to 10.
